# FASCICULE DE BREVET EUROPEEN

(11) **EP 1 256 118 B1**
(45) Date de publication et mention de la délivrance du brevet: **10.05.2006**
(21) Numéro de dépôt: 01904047.6
(22) Date de dépôt: 02.02.2001
(51) Int. Cl.: G21C 3/334

(54) **OUTIL DE PRISE ET DE MANUTENTION D'UN RESSORT FIXE SUR UN EMBOUT SUPERIEUR D'UN ASSEMBLAGE DE COMBUSTIBLE NUCLEAIRE ET PROCEDE DE REMPLACEMENT D'UN RESSORT**
WERKZEUG ZUM ERGREIFEN UND ZUR HANDHABUNG EINER AUF EINEM OBEREN ENDSTÜCK EINES KERNBRENNSTABBÜNDELS BEFESTIGTEN FEDER UND AUSTAUSCHVERFAHREN FÜR EINE FEDER
TOOL FOR GRASPING AND MANOEUVRING A SPRING FIXED ON A TOP END PIECE OF A NUCLEAR FUEL ASSEMBLY AND METHOD FOR REPLACING A SPRING

(30) Priorité: 15.02.2000 FR 0001860
(43) Date de publication de la demande: 13.11.2002
(73) Titulaire: Framatome ANP, 92080 Paris La Defense (FR)
(72) Inventeur: AMIET, Pierre, F-38200 Jardin (FR)
(74) Mandataire: Bouget, Lucien
(86) Numéro de dépôt international: PCT/FR2001/000330
(87) Numéro de publication internationale: WO 2001/061708

(56) Documents cités:
- EP-A- 0 212 902
- DATABASE WPI Section Ch, Week 198804 Derwent Publications Ltd., London, GB; Class K05, AN 1988-025829 XP002153702 & JP 62 287182 A (MITSUBISHI GENSHI NENRYO KK), 14 décembre 1987 (1987-12-14)
- PATENT ABSTRACTS OF JAPAN vol. 010, no. 299 (M-524), 11 octobre 1986 (1986-10-11) & JP 61 111278 A (MITSUBISHI HEAVY IND LTD), 29 mai 1986 (1986-05-29)
- PATENT ABSTRACTS OF JAPAN vol. 010, no. 357 (M-540), 2 décembre 1986 (1986-12-02) & JP 61 153029 A (MITSUBISHI ELECTRIC CORP), 11 juillet 1986 (1986-07-11)

## Description

L'invention concerne un outil de prise et de manutention de lames d'un ressort d'un assemblage de combustible nucléaire et l'utilisation de cet outil pour le montage et/ou le démontage d'un ressort.

L'invention s'applique en particulier aux ressorts des assemblages de combustible des réacteurs nucléaires refroidis par de l'eau sous pression.

Les assemblages de combustible des réacteurs nucléaires à eau sous pression comportent un faisceau de crayons tous parallèles entre eux maintenus à l'intérieur d'une ossature comportant des grilles-entretoises de maintien transversal des crayons, des tubes-guides dans certaines positions de crayons à l'intérieur du faisceau, comportant des parties d'extrémité en saillie par rapport aux crayons à chacune des extrémités du faisceau et des embouts fixés sur les parties d'extrémité des tubes-guides, à une certaine distance des extrémités du faisceau de crayons.

L'assemblage de combustible présente une forme générale prismatique et une section transversale qui est généralement de forme carrée. L'assemblage de combustible est placé dans le coeur du réacteur nucléaire, dans une disposition verticale, c'est-à-dire avec son axe longitudinal dans la direction verticale.

L'assemblage de combustible repose, par l'un de ses embouts ou embout inférieur, sur une plaque de support du coeur et le second embout, ou embout supérieur comporte des ressorts à lames destiné à assurer l'appui sur l'assemblage d'une plaque supérieure de coeur solidaire des équipements internes supérieurs du réacteur nucléaire.

La plaque supérieure de coeur vient en appui sur les ressorts de l'ensemble des assemblages de combustible du coeur, de manière à assurer le maintien des assemblages de combustible contre des forces verticales dirigées de bas en haut et dues à la circulation à grande vitesse de l'eau sous pression de refroidissement, à l'intérieur du coeur du réacteur nucléaire, tout en permettant aux assemblages de combustible de se déformer, par exemple par dilatation thermique au cours des phases de fonctionnement du réacteur nucléaire.

Les ressorts de maintien des assemblages de combustible sont fixés sur une surface supérieure sensiblement plane d'un cadre de forme carrée de l'embout supérieur. Chacun des ressorts est constitué par un empilement de lames de ressort comportant chacune un talon de fixation et une branche flexible inclinée par rapport aux talons de fixation. Les talons de fixation sont traversés par des ouvertures de passage de vis pour la fixation du ressort sur le cadre de l'embout supérieur. Lorsque les lames de ressort sont empilées, les ouvertures traversantes des talons en position superposée constituent un trou de passage pour une vis de fixation du ressort sur l'embout.

Généralement, quatre ressorts à lames sont fixés sur l'embout supérieur, chacun dans une partie d'angle du cadre de l'embout supérieur, de telle sorte que les lames de ressort d'un ressort s'étendent suivant la longueur de l'un des côtés du cadre de l'embout.

Les branches flexibles des lames du ressort sont disposées l'une au-dessus de l'autre et dans une disposition inclinée par rapport aux côtés du cadre de l'embout supérieur de l'assemblage de combustible. La plaque supérieure de coeur vient en contact avec la partie d'extrémité de la lame supérieure du ressort opposée au talon fixé sur le cadre de l'embout.

Pendant le séjour de l'assemblage de combustible dans le coeur du réacteur nucléaire, certaines lames de ressorts d'assemblage de combustible peuvent subir des détériorations qui nécessitent leur remplacement.

Des opérations de remplacement de ressorts ou de lames de ressort fixés sur un embout supérieur d'assemblage de combustible peuvent être effectuées dans la piscine de désactivation du combustible du réacteur nucléaire, après déchargement du coeur du réacteur nucléaire.

Dans la piscine de désactivation du combustible nucléaire, les assemblages de combustible sont placés dans une position verticale analogue à leur position dans le coeur du réacteur nucléaire, c'est-à-dire avec leur embout supérieur portant les ressorts à la partie la plus haute de l'assemblage de combustible. Cette partie supérieure de l'assemblage de combustible est généralement disposée sous une hauteur d'eau de dix mètres à l'intérieur de la piscine de désactivation et les opérations d'entretien et de réparation sont effectuées sur les assemblages de combustible depuis le niveau supérieur de la piscine avec une protection d'eau.

Du fait de l'inclinaison des lames de ressorts et de la fixation de ces lames de ressorts par des vis, le démontage et le remontage d'un ressort pour réaliser le remplacement d'au moins une lame de ressort est une opération complexe au cours de laquelle certaines lames de ressort peuvent se coincer dans les filets de la vis de fixation.

Une opération de démontage d'un ressort nécessite le dévissage d'au moins une vis de maintien, ce qui peut être réalisé à distance dans la piscine de désactivation du combustible en utilisant un outil de dévissage fixé à l'extrémité d'une perche.

Lors du dévissage de la vis, les lames de ressort qui sont libérées sont susceptibles de retomber vers l'avant, c'est-à-dire à l'opposé des talons de fixation, si bien que les talons de certaines lames de ressort peuvent venir s'engager dans les filets de la vis, au niveau de leur ouverture traversante. Dans ce cas, il est extrêmement difficile de réaliser le dégagement de la lame de ressort.

Il est également difficile de mettre en prise avec les branches inclinées d'un ressort un outil de manutention de grande longueur tel qu'utilisé dans une piscine du combustible d'un réacteur nucléaire.

De même, pour réaliser le montage d'un ressort de remplacement sur l'embout supérieur d'un assemblage de combustible placé sous eau dans la piscine de désactivation d'une centrale nucléaire, il est très difficile de mettre en place à distance les talons des lames de ressort en position superposée, de manière à assurer leur fixation par une vis dans chacun des angles de l'embout supérieur de l'assemblage de combustible.

Le but de l'invention est donc de proposer un outil de prise et de manutention de lames d'un ressort fixé sur une surface d'extrémité supérieure d'un embout supérieur d'un assemblage de combustible, à l'intérieur d'une piscine, chacune des lames comportant un talon de fixation et une branche flexible inclinée par rapport au talon et le ressort étant constitué par un empilement d'une pluralité de lames dont les talons placés de manière superposée sont traversés par au moins une ouverture de passage d'une vis de fixation du ressort sur l'embout et dont les branches flexibles sont placées l'une au-dessus de l'autre, dans une disposition inclinée par rapport à la surface supérieure de l'embout, cet outil permettant de réaliser dans des conditions facilitées, la prise, le démontage et le montage du ressort de l'assemblage de combustible.

Dans ce but, l'outil suivant l'invention comporte :
- une anse de manutention,
- une poignée de commande montée pivotante sur l'anse de manutention, autour d'un premier axe,
- au moins un ensemble articulé en forme de parallélogramme dont les axes d'articulation sont tous parallèles entre eux et parallèles au premier axe, comportant au moins deux tiges de suspension parallèles entre elles reliées chacune de manière articulée, à une première extrémité à la poignée de commande et, à une seconde extrémité, à une première traverse d'un sous-ensemble articulé en parallélogramme constitué de la première traverse, d'un patin d'appui des ressorts parallèle à la première traverse, et de biellettes parallèles entre elles reliées chacune, de manière articulée, à la première traverse à une première extrémité et au patin d'appui des ressorts à une seconde extrémité,
- ainsi qu'une bride de serrage des ressorts et des moyens de déplacement de la bride entre une position de serrage des lames du ressort entre la bride et le patin et une position desserrée, montés sur la traverse et des moyens de commande du déplacement de la bride accessibles au niveau de l'anse de manutention.

Afin de bien faire comprendre l'invention, on va maintenant décrire, à titre d'exemple, en se référant aux figures jointes en annexe, un mode de réalisation d'un outil suivant l'invention et son utilisation pour réaliser le remplacement du ressort d'un assemblage de combustible dans une piscine.

La figure 1 est une vue en élévation de l'outil suivant l'invention en position de prise d'un ressort d'un assemblage de combustible dans la piscine d'une centrale nucléaire.

La figure 2 est une vue en élévation latérale et en coupe partielle de l'outil représenté sur la figure 1.

La figure 3 est une vue en coupe suivant 3-3 de la figure 1.

La figure 4 est une vue en coupe suivant 4-4 de la figure 1.

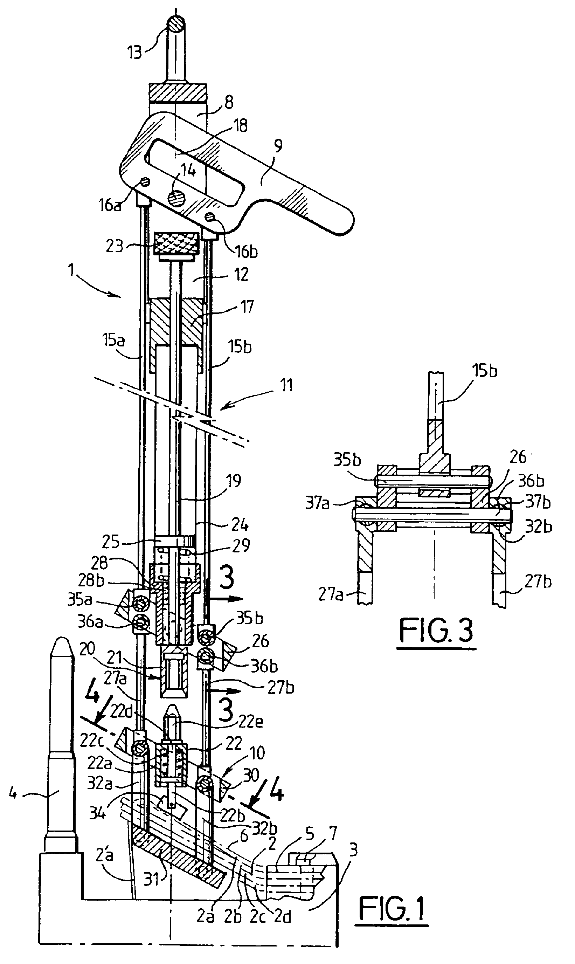

Sur la figure 1, on voit un outil de prise et de manutention de ressorts suivant l'invention désigné de manière générale par le repère 1 en position de prise d'un ressort 2 d'un embout supérieur 3 d'un assemblage de combustible placé dans une disposition verticale à l'intérieur de la piscine d'un réacteur nucléaire.

L'embout 3 de l'assemblage de combustible comporte, à sa périphérie, un cadre prismatique à section carrée dont les parties d'angles ou bossages sont surélevés par rapport à la surface supérieure du cadre.

Les ressorts de maintien de l'assemblage de combustible tels que 2 sont fixés chacun dans un angle du cadre et s'étendent suivant un côté du cadre de l'embout adjacent à l'angle dans lequel ils sont fixés.

Dans deux angles du cadre de l'embout disposés suivant une première diagonale sont fixés des pions 4 de positionnement de l'assemblage de combustible destinés à s'engager, lors de la mise en place de la plaque supérieure de coeur, dans des ouvertures de cette plaque supérieure de coeur.

Dans les deux autres angles de l'assemblage de combustible disposés suivant une seconde diagonale de l'embout, sont prévues des ouvertures d'engagement de pions de la plaque supérieure de coeur.

Chacun des ressorts tels que le ressort 2 est constitué d'une pluralité de lames de ressort (par exemple quatre lames 2a, 2b, 2c, 2d) empilées l'une sur l'autre et dans cet ordre de haut en bas.

Chaque lame de ressort comporte un talon de fixation 5 et une lame flexible 6 inclinée par rapport au talon de fixation 5 de forme plane.

Les talons 5 des lames de ressort sont traversés chacun par une ouverture de passage d'une vis de fixation 7 du ressort 2 sur l'embout supérieur 3. Lorsque les lames de ressort 2a, 2b, 2c, 2d sont empilées l'une sur l'autre, comme représenté sur la figure 1, les ouvertures des talons 5 des lames sont en position superposées de manière à permettre le passage de la vis de fixation 7 qui est vissée dans une ouverture taraudée du cadre de l'embout 3.

La lame supérieure 2a du ressort sur laquelle la plaque supérieure de coeur vient en appui comporte une extrémité recourbée et une branche de retenue et de guidage 2'a dans une ouverture du cadre de l'embout 3 de l'assemblage de combustible, appelée clé.

Pour effectuer le remplacement d'un ressort 2 ou d'une lame de ressort du ressort 2, on réalise sous eau, dans la piscine du combustible, le dévissage de la vis 7 de fixation des lames de ressort en utilisant un outil de dévissage fixé à l'extrémité d'une perche de manutention.

Préalablement au dévissage de la lame 7, l'outil de prise et de manutention 1 doit être mis en place pour assurer le maintien du ressort.

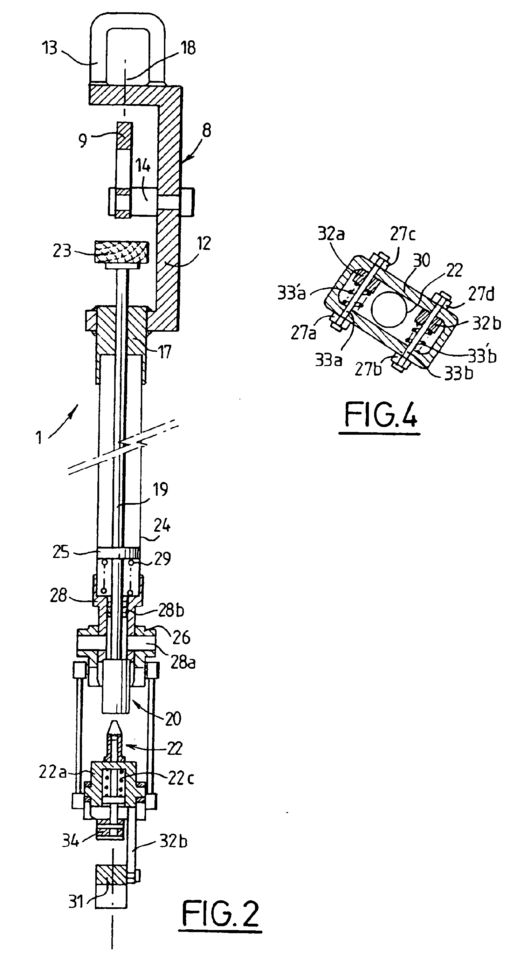

On va maintenant se reporter aux figures 1 et 2 pour décrire l'outil de prise et de manutention 1.

L'outil 1 comporte, de manière générale, une anse de manutention 8, une poignée de commande 9 montée sur l'anse de manutention et un ensemble 11 articulé en forme de parallélogramme assurant lui-même la suspension et la manoeuvre d'un sous-ensemble articulé 10 en forme de parallélogramme par l'intermédiaire duquel on assure la prise, l'orientation et la manutention des lames du ressort 2.

L'anse de manutention 8 comporte un arceau 13 de suspension de l'outil et un support 12 solidaire de l'arceau 13 sur lequel la poignée de manoeuvre 9 est montée pivotante par l'intermédiaire d'un axe 14.

L'ensemble de suspension articulé 11 comporte en particulier deux tiges de suspension 15a et 15b parallèles entre elles fixées de manière articulée sur la poignée de commande 9 par deux axes d'articulation 16a et 16b parallèles à l'axe 14 de montage pivotant de la poignée de commande 9.

De cette manière, l'ensemble articulé 11 est suspendu à l'anse de manutention 8, uniquement par l'intermédiaire de la poignée de manoeuvre 9 dont une partie, de liaison rectiligne entre les axes d'articulation 16a et 16b, constitue un côté du parallélogramme articulé de l'ensemble 11. Les axes d'articulation 16a et 16b sont placés de part et d'autre de l'axe de pivotement 14 et les axes géométriques de l'axe de pivotement 14 et des axes d'articulation 16a et 16b sont sensiblement coplanaires.

Le support 12 de l'anse de manutention 8 porte un palier 17 de guidage dans la direction axiale 18 de l'outil, de la tige 19 solidaire d'un embout 21 d'un dispositif 20 de manoeuvre de moyens de serrage 22 des lames du ressort 2.

La tige 19 est solidaire, à une première extrémité inférieure, de l'embout 21 et, à une seconde extrémité supérieure, d'un bouton de manoeuvre moleté 23.

Un élément tubulaire de guidage et de liaison 24 est fixé au palier 17 à l'une de ses extrémités, supérieure, dans une disposition coaxiale autour de la tige de manoeuvre 19. La tige de manoeuvre 19 est solidaire d'un piston de guidage 25 monté glissant à l'intérieur de l'élément tubulaire de guidage et de liaison 24.

Les tiges de suspension 15a et 15b sont reliées, à leur extrémité inférieure, à une seconde traverse, supérieure, 26 en forme de cadre à laquelle est suspendu, par l'intermédiaire de quatre tiges 27a, 27b, 27c et 27d (figure 4), le sous-ensemble articulé 10 en forme de parallélogramme.

Sur la seconde traverse 26, un palier 28 est monté articulé autour d'un axe 28a parallèle aux axes des ensembles articulés en forme de parallélogramme. Le palier 28 assure le guidage de la tige 19 de l'outil 20, par l'intermédiaire de bagues de glissement 28b.

Le palier 28 est fixé à l'extrémité inférieure de l'élément tubulaire 24 qui constitue une entretoise entre les paliers 17 solidaire de l'anse de manutention 8 et 28 porté par la seconde traverse 26 en forme de cadre.

Un ressort hélicoïdal 29 est intercalé entre le piston 25 solidaire de la tige 19 et un épaulement interne du palier 28. Le ressort 29 assure le rappel de la tige 19 et de l'embout 21 de l'outil 20, dans une position désengagée par rapport au dispositif 22 de serrage des lames du ressort 2.

Par poussée sur la tige 19 de l'outil 20 par l'intermédiaire du bouton moleté 23 situé au niveau de l'anse de manutention, on peut réaliser le déplacement de la tige 19 et de l'embout 21 de l'outil 20 à l'encontre du ressort de rappel hélicoïdal 29 pour engager l'embout 21 sur le dispositif 22 de serrage des lames de ressort de maintien 2 de l'assemblage de combustible. Le piston 25 solidaire de la tige 19, est guidé, comme indiqué plus haut, à l'intérieur de l'élément tubulaire 24 constituant à la fois un cylindre et une entretoise.

Le sous-ensemble articulé 10 comporte quatre éléments dans une disposition en parallélogramme : une première traverse 30 en forme de cadre constituant la traverse inférieure de l'ensemble articulé 11, un patin 31 de supportage des lames du ressort 2 et deux biellettes 32a et 32b parallèles entre elles, reliant la première traverse 30 et le patin 31, les biellettes 32a et 32b étant fixées de manière articulée à une première extrémité sur la première traverse 30 et à leur seconde extrémité sur le patin 31, les axes d'articulation des biellettes du sous-ensemble articulé 10 en forme de parallélogramme étant parallèles aux axes d'articulation de l'ensemble articulé de suspension 11 auquel est relié le sous-ensemble articulé en forme de parallélogramme 10, par l'intermédiaire de la première traverse 30.

Comme il est visible sur la figure 4, la première traverse 30 en forme de cadre assure la liaison articulée entre les chapes fixées à l'extrémité des quatre tiges 27a, 27b, 27c et 27d et les biellettes 32a et 32b, par l'intermédiaire des axes 33a et 33b et de ressorts hélicoïdaux 33'a et 33'b intercalés entre les biellettes respectives 32a et 32b et la surface intérieure de la traverse 30 en forme de cadre.

Le dispositif 22 de serrage des lames du ressort 2 comporte un corps 22a monté articulé autour d'un axe parallèle aux axes d'articulation sur la première traverse 30 et, montée mobile à l'intérieur du corps 22a, une tige 22b solidaire d'un piston de guidage et rappelée, dans la direction axiale, par un ressort 22c en appui sur le piston solidaire de la tige 22b.

La tige 22b porte, à l'une de ses extrémités, une bride 34 par l'intermédiaire d'un axe d'articulation parallèle aux axes des ensembles articulés. De plus, la tige 22b est reliée en translation mais libre en rotation, par rapport à une tige filetée 22d du dispositif de serrage 22, elle-même solidaire d'une tête d'actionnement 22e profilée du dispositif de serrage 22.

Le ressort 22c assure le rappel de la tige 22b et de la bride 34 en position de serrage des lames du ressort 2 entre le patin 31 et la bride 34.

En engageant l'embout 21 de l'outil 20 sur la tête 22e et en faisant tourner la tige 19 et l'embout 21 de l'outil 20 par l'intermédiaire du bouton moleté 23, dans le sens du dévissage, on peut réaliser le déplacement dans la direction axiale de la tige 22 et du patin d'appui 34 pour obtenir le desserrage des lames du ressort 2.

Sur la figure 3, on a représenté la seconde traverse 26 en forme de cadre à laquelle sont reliées les tiges 15a et 15b par l'intermédiaire d'axes tels que 35b et les quatre tiges 27a, 27b, 27c, 27d par l'intermédiaire d'un axe tel que 36b.

De plus, les chapes des tiges telles que 27a, 27b sont montées sur l'axe 36b, par l'intermédiaire de rotules telles que 37a et 37b. De cette manière, la suspension articulée du sous-ensemble 10 permet un certain débattement du sous-ensemble 10 en rotation autour d'axes perpendiculaires aux axes d'articulation tels que 35b et 36b. L'ensemble de serrage des ressorts 2 constitué par le dispositif de serrage 22 et le patin d'appui 31 présente ainsi une possibilité de débattement dans la direction horizontale.

On va maintenant décrire une opération de démontage de ressorts 2 d'un assemblage de combustible en utilisant un outil tel que l'outil 1 suivant l'invention.

L'outil 1 est suspendu par l'arceau de suspension 13 de l'anse de manutention 8, au crochet d'un moyen de levage disposé au-dessus du niveau de la piscine dans laquelle est plongé l'assemblage de combustible dont on réalise une opération de remplacement de ressorts 2.

L'assemblage de combustible est placé verticalement dans le fond de la piscine, de manière que son embout supérieur 3 portant le ressort 2 sur lequel on effectue un remplacement se trouve sous une certaine profondeur d'eau à l'intérieur de la piscine de désactivation de la centrale nucléaire.

On descend l'outil 1 à l'intérieur de la piscine, jusqu'à venir placer le patin de support 31 et la bride de serrage 34 dans une disposition latérale par rapport aux lames du ressort 2. La bride de serrage 34 est dans une position relevée, comme représenté sur la figure 2.

On règle l'inclinaison du patin 31 en actionnant la poignée de commande 9, de manière que le patin 31 présente une surface supérieure parfaitement parallèle à la surface inférieure de la lame de ressort inférieure 2d du ressort 2.

Il est à remarquer que le montage en parallélogramme de l'ensemble 11 et du sous-ensemble 10 permet d'obtenir une inclinaison du patin 31 identique à l'inclinaison de la branche de liaison de la poignée de commande 9 à laquelle sont reliées, de manière articulée, les tiges 15a et 15b de part et d'autre du premier axe 14.

On engage latéralement le patin 31 et la bride 34 sur les lames de ressort du ressort 2.

On déplace l'embout 21 de l'outil de serrage 20, de manière qu'il vienne coiffer la tête 22e du dispositif de serrage pour réaliser la libération du ressort 22c et le serrage des lames de ressort entre le patin 31 et la bride 34 par l'action du ressort 22c.

On exerce sur l'outil 1 une force dans la direction axiale dirigée vers le haut, de manière à soumettre les ressorts à une force de traction de l'ordre de 4 à 5 daN.

On dévisse la ou les vis de fixation 7 des lames de ressort en utilisant un tournevis fixé à l'extrémité d'une perche. Le démontage de la vis peut nécessiter le découpage d'une goupille de fixation imperdable de la vis 7.

Après enlèvement de la ou des vis de fixation 7, on provoque le basculement vers l'avant des lames du ressort 2 à l'aide de la poignée de commande 9, en basculant légèrement celle-ci de manière à faire tourner la première traverse 30 et le patin 31 du sous-ensemble 10. On réalise ainsi le dégagement des talons 5 des lames de ressort de la partie d'angle surélevée ou bossage du cadre de l'embout supérieur 2 dans laquelle sont engagés les talons des lames de ressort.

On fait tourner les lames de ressort soit vers l'intérieur soit vers l'extérieur de l'embout, suivant leur sens de montage, de manière à les dégager des bossages, cette rotation étant obtenue en faisant tourner l'ensemble de l'outil autour de l'axe vertical 18. La rotation des lames est accompagnée d'un léger basculement des lames vers le bas réalisé à l'aide de la poignée de commande 9 ainsi que d'un mouvement vers le bas de l'outil 1, sur quelques millimètres, pour dégager la partie de guidage et de retenue 2'a de la lame supérieure 2a engagée dans une ouverture du cadre de l'embout et constituant une clé de blocage du ressort.

On soulève alors les lames de ressort dans leur ensemble pour les amener jusqu'au niveau supérieur de la piscine.

On réalise par exemple le remplacement d'une lame de ressort détériorée au-dessus de la piscine et on fixe à nouveau l'ensemble du ressort 2 réparé, dans son état d'assemblage, entre le patin 31 et la bride 34 de l'outil 1.

On descend le ressort dans la piscine et on réalise son montage par des opérations inverses des opérations de démontage qui ont été décrites précédemment.

Il est à remarquer que le montage sur rotules du sous-ensemble articulé 10 en forme de parallélogramme permet d'éviter des arc-boutements de la lame supérieure 2a du ressort dont la clé 2'a est engagée dans le cadre de l'embout 3. Ce montage permet également d'indiquer à l'opérateur tout risque de coincement entre les lames de ressort et l'embout supérieur 3, au cours de la rotation des lames pour le démontage ou le montage.

L'outil selon l'invention permet donc d'optimiser les opérations de démontage et de montage des lames de ressort de maintien d'un assemblage de combustible.

L'invention ne se limite pas au mode de réalisation qui a été décrit.

C'est ainsi que les différents éléments articulés peuvent être montés d'une manière différente et qu'il est possible par exemple de réaliser directement la liaison entre l'ensemble articulé de suspension et le sous-ensemble articulé inférieur, sans utiliser une seconde traverse telle que la traverse 26 qui est utilisée, dans le cas du mode de réalisation qui a été décrit, pour monter le palier de l'outil 20 de serrage des ressorts.

Le nombre et la disposition des tiges de suspension de l'ensemble articulé 11 et du sous-ensemble 10 sous forme de parallélogrammes déformables peuvent être différents de ceux qui ont été décrits.

L'invention s'applique au cas de tout assemblage de combustible comportant des ressorts de maintien dont les lames de ressort sont inclinées par rapport à la surface supérieure d'un embout d'un assemblage de combustible sur lequel ils sont fixés.

## Revendications

1. Outil de prise et de manutention de lames (2a, 2b, 2c, 2d) d'un ressort (2) fixées sur une surface d'extrémité supérieure d'une embout supérieur (3) d'un assemblage de combustible nucléaire, à l'intérieur d'une piscine d'une centrale nucléaire, chacune des lames (2a, 2b, 2c, 2d) comportant un talon de fixation (5) et une branche flexible (6) inclinée par rapport au talon (5) et le ressort (2) étant constitué par un empilement d'une pluralité de lames (2a, 2b, 2c, 2d) dont les talons (5) placés de manière superposée sont traversés par au moins une ouverture de passage d'une vis de fixation (7) du ressort (2) sur l'embout (3) et dont les branches flexibles (6) sont placées l'une au-dessus de l'autre, dans une disposition inclinée par rapport à la surface supérieure de l'embout (3), **caractérisé par le fait qu'**il comporte :
- une anse de manutention (8),
- une poignée de commande (9) montée pivotante sur l'anse de manutention (8) autour d'un premier axe (14),
- au moins un ensemble articulé (10, 11) en forme de parallélogramme dont les axes d'articulation sont tous parallèles entre eux et parallèles au premier axe (14) comportant au moins deux tiges de suspension (15a, 15b) parallèles entre elles reliées chacune, de manière articulée, à une première extrémité, à la poignée de commande (9) et, à une seconde extrémité, à une première traverse (30) d'un sous-ensemble (10) articulé en parallélogramme constitué de la première traverse (30), d'un patin d'appui (31) des lames de ressort (2a, 2b, 2c, 2d) parallèle à la première traverse (30) et de biellettes (32a, 32b) parallèles entre elles reliées chacune de manière articulée à la première traverse (30) à une première extrémité et au patin d'appui (31) des lames de ressort (2a, 2b, 2c, 2d) à une seconde extrémité,
- ainsi qu'une bride de serrage des lames de ressort (2a, 2b, 2c, 2d) et des moyens (22) de déplacement de la bride (34) entre une position de serrage des lames de ressort (2a, 2b, 2c, 2d) entre la bride (34) et le patin (31) et une position desserrée, montés sur la traverse (30), et des moyens de commande (20) du déplacement de la bride (34) accessibles au niveau de l'anse de manutention (18).

2. Outil suivant la revendication 1, **caractérisé par le fait que** le sous-ensemble articulé (10) en forme de parallélogramme est relié aux tiges de suspension (15a, 15b) par l'intermédiaire d'une seconde traverse (26) et d'un second ensemble de tiges de suspension (27a, 27b, 27c, 27d) reliées chacune, de manière articulée, à l'une de leurs extrémités, à la traverse supérieure (26) et, à une seconde extrémité, à la première traverse (30) ou traverse inférieure du sous-ensemble (10) en forme de parallélogramme, un moyen de guidage (28) d'un dispositif (20, 21) d'actionnement des moyens de déplacement (22) de la bride (34) étant monté sur la seconde traverse (26).

3. Outil suivant la revendication 2, **caractérisé par le fait que** les moyens de déplacement de la bride (34) entre une position de serrage et une position desserrée des lames de ressort (2a, 2b, 2c, 2d) sont constitués par un corps (22a) monté sur la première traverse (30), une tige montée coulissante dans le corps (22a) reliée de manière articulée à la bride de serrage (34) à l'une de ses extrémités, un ressort (22c) de rappel de la tige (22b) et de la bride de serrage (34) en position de serrage et des moyens (22d, 22e) de déplacement de la tige (22b) et de la bride (34) vers une position desserrée à l'encontre de l'action du ressort de rappel (22c).

4. Outil suivant la revendication 3, **caractérisé par le fait que** les moyens de déplacement de la tige (22b) et du patin de serrage (34) sont constitués par une tige filetée (22d) solidaire d'une tête (22e), les moyens de commande (20, 21, 19, 23) des moyens de déplacement (22) de la bride (34) étant constitués par un embout (21) d'entraînement solidaire en rotation de la tête (22e) des moyens de déplacement (22) de la bride de serrage, d'une tige d'actionnement (19), montée glissante et mobile en rotation, par l'intermédiaire de paliers (17, 28) dans la direction axiale de l'outil (1) et un bouton moleté de déplacement en translation et en rotation de la tige (19) de l'outil (20) à une extrémité axiale de la tige (19) opposée à l'embout (21), située au voisinage de la poignée de commande (9).

5. Outil suivant l'une quelconque des revendications 1 à 4, **caractérisé par le fait que** la poignée de commande (9) comporte une partie de liaison sensiblement rectiligne par l'intermédiaire de laquelle la poignée de commande (9) est montée rotative sur l'anse de manutention (8) par l'intermédiaire du premier axe (14) et à laquelle sont reliées de manière articulée, autour d'axes parallèles au premier axe (14), des tiges de suspension (15a, 15b) du premier ensemble de suspension, dans des dispositions situées de part et d'autre du premier axe (14), les axes géométriques des axes d'articulation (16a, 16b) des tiges (15a, 15b) du premier ensemble de suspension et du premier axe (14) étant sensiblement coplanaires, de telle sorte que l'inclinaison de la première traverse, ou traverse inférieure (30) et du patin d'appui (31) du sous-ensemble articulé (10) en forme de parallélogramme soit identique à l'inclinaison de la partie de liaison rectiligne de la poignée de commande (9).

6. Outil suivant l'une quelconque des revendications 2 à 4, **caractérisé par le fait que** le sous-ensemble (10) articulé en forme de parallélogramme est suspendu à l'ensemble de suspension (11) par l'intermédiaire de tiges articulées sur des axes montés sur la seconde traverse supérieure (26), par l'intermédiaire de rotules (37a, 37b).

7. Procédé de remplacement d'au moins une lame (2a, 2b, 2c, 2d) d'un ressort (2) fixée par au moins une vis (7) sur un embout supérieur (3) d'un assemblage de combustible nucléaire, en position verticale dans une piscine d'une centrale nucléaire, en utilisant un outil de prise et de manutention suivant l'une quelconque des revendications 1 à 6, **caractérisé par le fait:**
- **qu'**on descend l'outil (1) dans la piscine de la centrale nucléaire, la bride de serrage (34) étant dans une position desserrée,
- **qu'**on règle l'inclinaison du patin d'appui (31) du sous-ensemble articulé en forme de parallélogramme (10) à l'aide de la poignée de commande (9) de manière que le patin d'appui (31) soit parallèle à la branche flexible d'une lame inférieure (2d) du ressort (2),
- **qu'**on déplace latéralement l'outil (1) par rapport au ressort (2) pour introduire les lames de ressort (2a, 2b, 2c, 2d) entre la bride de serrage (34) et le patin d'appui (31),
- **qu'**on réalise le serrage des lames de ressort (2a, 2b, 2c, 2d) du ressort (2) entre le patin d'appui (31) et la bride de serrage (34), à l'aide des moyens de déplaceme it (22) de la bride (34) et du moyen de commande (20) des moyens de déplacement (22) de la bride de serrage,
- **qu'**on exerce une traction sur l'outil (1), dans la direction axiale (18) verticale de l'outil, par l'intermédiaire de l'anse de manutention (8),
- **qu'**on démonte l'au moins une vis (7) de fixation des lames de ressort du ressort (2),
- **qu'**on déforme le sous-ensemble articulé (10) par l'intermédiaire de la poignée de commande (9) pour faire basculer les lames de ressort (2a, 2b, 2c, 2d) du ressort (2) et dégager les talons (5) des lames de ressort d'une partie en saillie ou bossage de l'embout supérieur (3) de l'assemblage de combustible, et
- **qu'**on fait tourner l'outil (1) autour de son axe vertical (18), pour faire tourner les lames de ressort du ressort (2), soit vers l'intérieur, soit vers l'extérieur de l'embout supérieur (3) de l'assemblage de combustible,
- enfin qu'on soulève l'outil (1) dans sa direction axiale verticale (18) pour extraire les lames de ressort du ressort (2) de la piscine de la centrale nucléaire.

8. Procédé suivant la revendication 7, **caractérisé par le fait que**, pendant qu'on fait tourner l'outil (1) autour de son axe vertical (18) pour faire tourner les lames de ressort du ressort (2) vers l'intérieur ou l'extérieur de l'embout supérieur (3) de l'assemblage de combustible, on fait pivoter les lames de ressort à l'aide de la poignée de commande (9) et on abaisse l'outil (1) dans sa direction axiale verticale (18).

## Patentansprüche

1. Werkzeug zum Ergreifen und Handhaben von Blättern (2a, 2b, 2c, 2d) einer an einer oberen Endfläche eines oberen Endteils (3) eines Brennelements befestigten Feder (2) im Innern eines Beckens eines Kernkraftwerks, wobei jedes der Blätter (2a, 2b, 2c, 2d) eine Befestigungsferse (5) umfasst und ein in Bezug auf die Ferse (5) und die Feder (2) geneigter flexibler Zweig (6) durch einen Stapel aus einer Vielzahl von Blättern (2a, 2b, 2c, 2d) gebildet wird, deren aufeinanderliegende Fersen (5) von wenigstens einem Durchgangsloch für eine Schraube (7) zur Befestigung der Feder (2) auf dem Endteil (3) durchquert werden und deren flexible Zweige (6) in einer in Bezug auf die Oberfläche des Endteils (3) geneigten Anordnung aufeinanderliegen,
**dadurch gekennzeichnet, dass** es umfasst:
- einen Handhabungshenkel (8),
- einen Betätigungsgriff (9), schwenkbar um eine erste Achse (14) in den Handhabungshenkel (8) montiert,
- wenigsten ein parallelogrammförmiges gelenkiges System (10, 11), dessen Gelenkachsen alle zueinander parallel sind und zu der ersten Achse (14) parallel sind und das wenigstens zwei zueinander parallele Aufhängestangen (15a, 15b) umfasst, die mit einem ersten Ende gelenkig mit dem Betätigungsgriff (9) verbunden sind und mit einem zweiten Ende mit einer ersten Traverse (30) eines parallelogrammartig angelenkten Untersystems (10), gebildet durch die erste Traverse (30), einen Stützschuh (31) der zu der ersten Traverse (30) parallelen Federblätter (2a, 2b, 2c, 2d) und zueinander parallele Anlenkstangen (32a, 32b), jede mit einem ersten Ende mit der ersten Traverse (30) und mit einem zweiten Ende mit dem Stützschuh (31) der Federblätter (2a, 2b, 2c, 2d) verbunden,
- einen Flansch (34) zum Einspannen der Federblätter (2a, 2b, 2c, 2d) sowie in die Traverse (30) montierte Einrichtungen (22) zum Verschieben des Flansches (34) zwischen einer Einspannstellung der Federblätter (2a, 2b, 2c, 2d) zwischen dem Flansch (34) und dem Schuh (31) und einer entspannten Stellung, und Verschiebungsantriebseinrichtungen (20) des Flansches (34), zugänglich in Höhe des Handhabungshenkels (18).

2. Werkzeug nach Anspruch 1, **dadurch gekennzeichnet, dass** das parallelförmige gelenkige Untersystem (10) mit den Aufhängestangen (15a, 15b) durch eine zweite Traverse (26) und zweite Aufhängestangen (27a, 27b, 27c, 27d) verbunden ist, jede mit einem ihrer Enden an der oberen Traverse (26) und mit einem zweiten Ende an der ersten Traverse oder unteren Traverse (30) des parallelogrammförmigen Untersystems (10) angelenkt, wobei eine Führungseinrichtung (28) einer Betätigungsvorrichtung (20, 21) der Verschiebungseinrichtungen (22) des Flansches (34) in die zweite Traverse (26) montiert ist.

3. Werkzeug nach Anspruch 2, **dadurch gekennzeichnet, dass** die Verschiebungseinrichtungen des Flansches (34) zwischen einer Stellung zum Einspannen der Federblätter (2a, 2b, 2c, 2d) und einer entspannten Stellung gebildet werden durch ein in die erste Traverse (30) montiertes Gehäuse (22a), eine verschiebbar in das Gehäuse (22a) montierte Stange, mit einem ihrer Enden an dem Spannflansch (34) angelenkt, eine Rückstellfeder (22c) der Stange (22b) und des Spannflansches (34) in die Einspannstellung und Einrichtungen (22d, 22e) zum Verschieben der Stange (22b) und des Flansches (34) in eine entspannte Stellung, gegen die Wirkung der Rückstellfeder (22c).

4. Werkzeug nach Anspruch 3, **dadurch gekennzeichnet, dass** die Verschiebungseinrichtungen der Stange (22b) und des Spannflansches (34) durch eine mit einem Kopf (22e) verbundene Gewindestange (22d) gebildet werden, und die Betätigungseinrichtungen (20, 21, 19, 23) der Verschiebungseinrichtungen (22) des Flansches (34) gebildet werden durch einen für den Rotationsantrieb mit dem Kopf (22e) der Verschiebungseinrichtungen (22) des Spannflansches drehfest verbundenen Ansatz (21), eine Betätigungsstange (19), verschiebbar und rotationsmobil mittels Lagern (17, 28) in der axialen Richtung des Werkzeugs (1), und einen gerändelten Drehknopf (23) an einem dem Ansatz (21) entgegengesetzten axialen Ende der Stange (19), in der Nähe des Betätigungsgriffs (9), zur Translations- und Rotationsverschiebung der Stange (19) des Werkzeugs,

5. Werkzeug nach einem der Ansprüche 1 bis 4, **dadurch gekennzeichnet, dass** der Betätigungsgriff (9) einen im Wesentlichen geradlinigen Verbindungsteil umfasst, mittels dem der Betätigungsgriff (9) mit Hilfe der ersten Achse (14) schwenkbar in den Handhabungshenkel (8) montiert ist und mit dem Aufhängestangen (15a, 15b) des ersten Aufhängesystems gelenkig verbunden ist, mittels zu der ersten Achse (14) parallelen Achsen, in beiderseits der ersten Achse (14) befindlichen Positionen, wobei die geometrischen Achsen der Gelenkachsen (16a, 16b) der Stangen (15a, 15b) des ersten Aufhängesystems und der ersten Achse (14) im Wesentlichen koplanar sind, so dass die Neigung der ersten Traverse oder unteren Traverse (30) und des Stützschuhs (31) des parallelogrammförmigen gelenkigen Untersystems (10) der Neigung des geradlinigen Verbindungsteils des Betätigungsgriffs (9) entspricht.

6. Werkzeug nach einem der Ansprüche 2 bis 4, **dadurch gekennzeichnet, dass** das parallelogrammförmige gelenkige Untersystems (10) an dem Aufhängesystem (11) mittels Stangen aufgehängt ist, die an der zweiten, oberen Traverse (26) mit Kugelgelenken (37a, 37b) angelenkt sind.

7. Verfahren zum Austauschen wenigstens eines Blatts (2a, 2b, 2c, 2d) einer Feder (2), die durch wenigstens eine Schraube (7) an einem oberen Endteil (3) eines sich in vertikaler Position in einem Becken eines Kernkraftwerks befindlichen Brennelements befestigt ist, wobei ein Greif- und Handhabungswerkzeug nach einem der Ansprüche 1 bis 6 benutzt wird,
**dadurch gekennzeichnet:**
- **dass** man das Werkzeug (1) in das Becken des Kernkraftwerks absenkt, wobei sich der Spannflansch in einer entspannten Stellung befindet,
- **dass** man die Neigung des Stützschuhs (31) des parallelogrammförmigen gelenkigen Untersystems (10) mit Hilfe des Betätigungsgriffs (9) so einstellt, dass der Stützschuh (31) parallel ist zu dem flexiblen Zweig eines unteren Blatts (2d) der Feder (2),
- **dass** man das Werkzeug (1) in Bezug auf die Feder (2) seitlich verschiebt, um die Federblätter (2a, 2b, 2c, 2d) zwischen Spannflansch (34) und Stützschuh (31) einzuführen,
- **dass** man die Federblätter (2a, 2b, 2c, 2d) der Feder (2) zwischen Stützschuh (31) und Spannflansch (34) einspannt mit Hilfe der Verschiebungseinrichtungen (22) des Spannflansches (34) und der Antriebseinrichtungen (20) der Verschiebungseinrichtungen (22) des Spannflansches,
- **dass** man auf das Werkzeug (1) am Handhabungshenkels (8) in der Richtung der vertikalen Achse (18) eine Zugkraft ausübt,
- **dass** man wenigstens eine Befestigungsschraube (7) der Blätter der Feder (2) demontiert,
- **dass** man das gelenkige Untersystem (10) mit Hilfe des Betätigungsgriffs (9) verformt, um die Federblätter (2a, 2b, 2c, 2d) der Feder (2) zu kippen und die Fersen (5) der Federblätter aus einem überhöhten Teil des oberen Endteils (3) des Brennelements zu befreien, und
- **dass** man das Werkzeug (1) um seine vertikale Achse dreht, um die Blätter der Feder (2) entweder auf die Innenseite oder die Außenseite des oberen Endteils (3) des Brennelements zu drehen,
- **dass** man schließlich das Werkzeug (1) in seiner vertikalen axialen Richtung (18) hochzieht, um die Federblätter der Feder (2) aus dem Becken des Kernkraftwerks zu entfernen.

8. Verfahren nach Anspruch 7, **dadurch gekennzeichnet, dass** man, während man das Werkzeug (1) um seine vertikale Achse (18) dreht, um die Federblätter der Feder (2) auf die Innenseite oder die Außenseite des oberen Endteils (3) des Brennelements zu drehen, man die Federblätter mit Hilfe des Betätigungsgriffs (9) schwenkt und man das Werkzeug (1) in seiner vertikalen axialen Richtung (18) absenkt.

## Claims

1. A tool for the take-up and handling of the leaves (2a, 2b, 2c, 2d) of a spring (2) fixed to an upper surface of a top end piece (3) of a nuclear fuel assembly in the pool of a nuclear power station, in which each of the leaves (2a, 2b, 2c, 2d) has a fixing tab (5) and flexible arm (6) inclined with respect to the tabs (5) and spring (2), which consists of a stack of leaves (2a, 2b, 2c, 2d), whose superimposed tabs (5) are crossed by at least one hole for a screw (7) that fixes the spring (2) to the end piece (3), and whose flexible arms (6) are placed one on top of the other in an inclined position with respect to the upper surface of the end piece, such tool being **characterised by**:
- a holding loop (8),
- a control handle (9) that pivots about a first axis (14) on the holding loop (8),
- at least one articulated assembly (10, 11) of parallelogram form, whose articulating axes are parallel with each other and to the first axis (14), the assembly consisting of at least two parallel suspension rods (15a, 15b), each having a first end pivotally connected to the control handle (9) and a second end pivotally connected to a first strut (30) of a sub-assembly (10) of articulated parallelogram form, comprising the first strut (30), a support rail (31) for the leaves (2a,2b,2c,2d) of the spring, parallel to the first strut (30), and parallel connecting rods (32a,32b), each pivotally connected to the first strut (30) at a first end and to the support rail (31) of the leaves (2a,2b,2c,2d) of the spring at a second end,
- a tightening flange for the leaves of the spring (2a, 2b, 2c, 2d), and means (22) for displacing the flange between a tightened position of the spring leaves (2a, 2b, 2c, 2d) between the flange (34) and the rail (31) and a released position, fitted to the strut (30) and means (20) for controlling displacement of the flange (34), accessible at the holding loop (8).

2. A tool in accordance with claim 1, **characterised in that** the articulated sub-assembly (10) of parallelogram form is linked to the suspension rods (15a, 15b) by a second strut (26) and a second assembly of suspension rods (27a, 27b, 27c, 27d), each pivotally connected at one end to the upper strut (26) and at the other end to the first strut (30) or the lower strut of sub-assembly (10) of parallelogram form with a guide means (28) of a device (20,21) for actuating the displacement means (22) of the flange (34) being mounted on the second strut (26).

3. A tool in accordance with claim 2, **characterised in that** the means for displacing the flange (34) between a tightened and released position of the spring leaves (2a, 2b, 2c, 2d) consist of a casing (22a) mounted on the first strut (30), a sliding rod in the casing (22a) with articulated connection to the tightening flange (34) at one end, a return spring (22c) urging the rod (22b) and the tightening flange (34) towards the tightened position, and means (22d, 22e) for displacing the rod (22b) and flange (34) towards a released position against the return action of the spring (22c).

4. A tool in accordance with claim 3, **characterised in that** the means for displacing the rod (22b) and tightening flange (34) consist of a threaded rod (22d) attached to a head (22e) with the control means (20, 21, 19, 23) for the displacement means (22) of the flange (34) consisting of a drive tip (21) which rotates with the head (22e) of the tightening flange displacement means (22), a drive rod (19) which slides and rotates by means of bearings (17, 28) in the axial direction of the tool (1), and a flanged knob for the translation and rotation movement of the rod (19) of tool (20) at the axial end of rod (19) opposite the tip (21), situated in the vicinity of the control handle (9).

5. A tool in accordance with any of the claims 1 to 4, **characterised in that** the control handle forms part of a substantially straight link by means of which the control handle (9) is rotatably mounted on the holding loop (8) by means of the first axis (14), to which the suspension rods (15a , 15b) of the first suspension assembly on both sides of the first axis (14) are pivotally connected around the axes parallel to the first axis (14), the geometric axes of the pivoting axes (16a, 16b) of the rods (15a, 15b) of the first suspension assembly and the first axis (14) being substantially co-planar, in such a way that the inclination of the first, or lower strut (30) and the support rail (31) of the articulated sub-assembly (10) of parallelogram form is identical to the inclination of the straight section of the control handle (9) link.

6. A tool in accordance with any of the claims 2 to 4, **characterised in that** the articulated sub-assembly (10) of parallelogram form is suspended from the suspension assembly (11) by means of rods pivoted on the axes mounted on the second, upper strut (26) by means of ball-and-socket joints (37a, 37b).

7. A method for the replacement of at least one leaf (2a, 2b, 2c, 2d) of a spring (2) fixed by means of a screw (7) to a top end piece (3) of a nuclear fuel assembly, in the vertical position in the pool of a nuclear power station, using a take-up and handling tool in accordance with any of the claims from 1 to 6, **characterised in that**:
- the tool (1) is lowered into the pool of the nuclear power station with the tightening flange (34) in the released position,
- the inclination of the support rail (31) of the articulated sub-assembly (10) of parallelogram form is adjusted using the control handle (9) in such a way that the support rail (31) is parallel to the flexible arm of the lowest leaf (2d) of the spring (2),
- the tool (1) is moved laterally with respect to the spring (2) to insert the leaves (2a, 2b, 2c, 2d) between the tightening flange (34) and the support rail (31),
- the leaves (2a, 2b, 2c, 2d) of spring (2) are tightened between the support rail (31) and the tightening flange (34) using the means (22) for displacing the flange (34) and the control means (20) for the displacement means (22) of the tightening flange (34),
- traction is exerted on the tool (1) in the vertical axial direction (18) of the tool by means of the holding loop (8),
- at least one fixing screw (7) is removed from the leaves of the spring (2),
- the articulated sub-assembly (10) is pivoted using the control handle (9) to tip over the leaves (2a, 2b, 2c, 2d) of spring (2) and release the tabs (5) from the leaves in the projecting part or boss of the top end piece (3) of the fuel assembly, and
- the tool (1) is made to turn through its vertical axis (18) to move the leaves of spring (2) either to the inside or outside of the top end piece (3) of the fuel assembly,
- finally, the tool (1) is raised in the vertical axial direction (18) to remove the leaves from the spring (2) from the pool of the nuclear power station.

8. A method in accordance with claim 7, **characterised in that**, while the tool (1) is turning through its vertical axis (18) to move the leaves of spring (2) either to the inside or outside of the top end piece (3) of the fuel assembly, the leaves of the spring are pivoted using the control handle (9) and the tool (1) is lowered in the vertical axial direction (18).
